# EUROPEAN PATENT APPLICATION

(11) **EP 1 549 038 A2**
(43) Date of publication of application: **29.06.2005**
(21) Application number: 04021845.5
(22) Date of filing: 14.09.2004
(51) Int. Cl.: H04N 1/00

(54) **Multifunction apparatus and distribution server**

(30) Priority: 15.12.2003 JP 2003417012
(71) Applicant: MATSUSHITA ELECTRIC INDUSTRIAL CO., LTD., Kadoma-shi, Osaka 571-8501 (JP)
(72) Inventor: Matsuzawa, Yukari, Tokyo 152-0011 (JP); Ozaki, Minoru, Kawanishi-shi Hyogo 666-0033 (JP); Kitajima, Ikuo, Tokyo 177-0031 (JP); Osanai, Akira, Yokohama-shi Kanagawa 220-0062 (JP); Sakamoto, Masakiyo, Tokyo 146-0093 (JP)
(74) Representative: Grünecker, Kinkeldey, Stockmair & Schwanhäusser Anwaltssozietät

(57) **Abstract**

Each operation screen for jobs to be executed by a multifunction apparatus is layered, according operation steps of the multifunction apparatus, and registered in a distribution server. Menus for displaying the operation screens are also registered in the distribution server, the menus being arranged in a tree-shape configuration. Corresponding to an operation on the multifunction apparatus, the menus are sequentially delivered from the distribution server to the multifunction apparatus, starting from a menu in the top layer. The multifunction apparatus displays each operation screen based on the delivered menus. Menu includes display text (text displayed on the operation screen), next screen name (screen name of the subordinate screen displayed on the operation screen), and action (command for the multifunction apparatus to execute).

## Description

### BACKGROUND OF THE INVENTION

### 1. Field of the Invention

The present invention relates to a multifunction apparatus that utilizes a menu necessary for an operation by receiving the menu via a network. The invention also relates to a distribution server that distributes such a menu to the multifunction apparatus.

### 2. Description of Related Art

In recent years, it has become customary for multifunction apparatuses to obtain an address book in order to distribute scanned data to terminals (PCs) via a network. The distribution server generates such an address book for the scanned data distribution. In the address book, terminals and document management servers are defined. The multifunction apparatus obtains the address book by pressing an address obtaining button displayed on a panel, and obtains an address as a distribution destination of the scanned data. Then, the document scanning process is performed and the scanned data is transmitted, via the distribution server, to the distribution destination having the selected address.

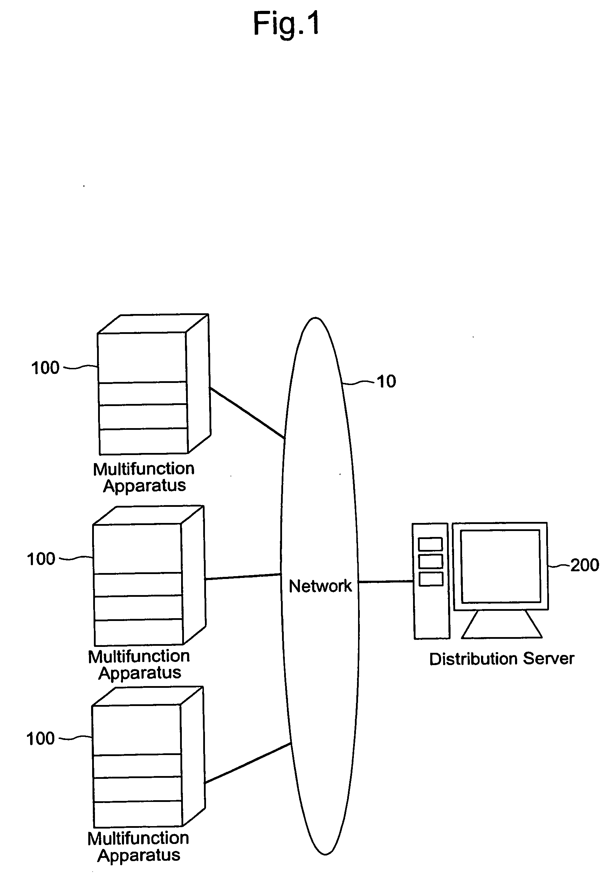

Upon registering a menu, an apparatus has been also introduced, in which a user creates a menu screen that minimizes the number of operations to reach a desired menu and stores the menu (e.g., Related Art 1).
- [Related Art 1]: Japanese Patent Laid Open Application H9-54668 (paragraph 0018; Fig.1)

However, with the above-described conventional technology, it is impossible to display jobs customized for each individual. Therefore, the user has to look for a desired menu from menus shared by a plurality users of the same multifunction apparatus. In addition, storing the menu information (to be used by the users) within the apparatus requires a storage memory.

### SUMMARY OF THE INVENTION

The present invention addresses the above-described problems. The purpose of the invention is to provide a multifunction apparatus and a distribution server that do not burden the memory capacity of the multifunction apparatus and that are more time saving for the user to find a desired menu from a plurality of menus.

According to the present invention, data to be displayed on an operation screen is layered into a plurality of menus according operation steps and is stored, for each job, in a distribution server, the operation screen being used to input a menu selection as an instruction from the user. Corresponding to an operation on a multifunction apparatus, the menus are sequentially delivered from the distribution server to the multifunction apparatus, starting from a menu in the top layer. The multifunction apparatus displays, corresponding to the operation, menus by downloading each operation screen one after another.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 illustrates a network configuration to which an embodiment of the present invention is applied;
Fig. 2 is a functional block diagram illustrating a multifunction apparatus of Fig. 1;
Fig. 3 is a schematic view of the multifunction apparatus of Fig. 2;
Fig. 4 is a plane view of a panel provided in the multifunction apparatus of Fig. 2;
Fig. 5 is a functional block diagram illustrating a distribution server of Fig. 1;
Fig. 6 illustrates a data configuration of menus stored in the distribution server;
Fig. 7 is a partial data configuration illustrating in detail the menus of Fig. 6 stored in a tree-shaped configuration;
Fig. 8 (a) is a configuration of an initial screen displayed on the multifunction apparatus;
Fig. 8 (b) is a configuration of a menu screen displaying top menus;
Fig. 8 (c) is a configuration of a menu screen displaying menus one layer below the top menus;
Fig. 9 is a flowchart illustrating a process for the multifunction apparatus to issue an online menu obtaining request;
Fig. 10 is a flowchart illustrating a process for the multifunction apparatus and the distribution server after the online menu obtaining request is issued; and
Fig. 11 is a flowchart illustrating a process for the multifunction apparatus and the distribution server after executing a job (e.g., scanning).

### DETAILED DESCRIPTION OF PREFERRED EMBODIMENTS

The embodiments of the distribution server system, provided by the multifunction apparatus and distribution server of the present invention, are explained in the following, in reference to the above-described drawings.

Fig. 1 illustrates a network configuration of the distribution server system. A plurality of multifunction apparatuses 100 and distribution servers 200 are connected to network 10. Although network 10 can be configured with a local area network (LAN) or the Internet, this embodiment employs a LAN for network 10. Multifunction apparatus 100 can be connected to network 10, and has a plurality of functions such as copier, printer, scanner, facsimile transmission/reception, and Internet communication functions. The multifunction apparatus of the present invention is not limited to the above-described functions.

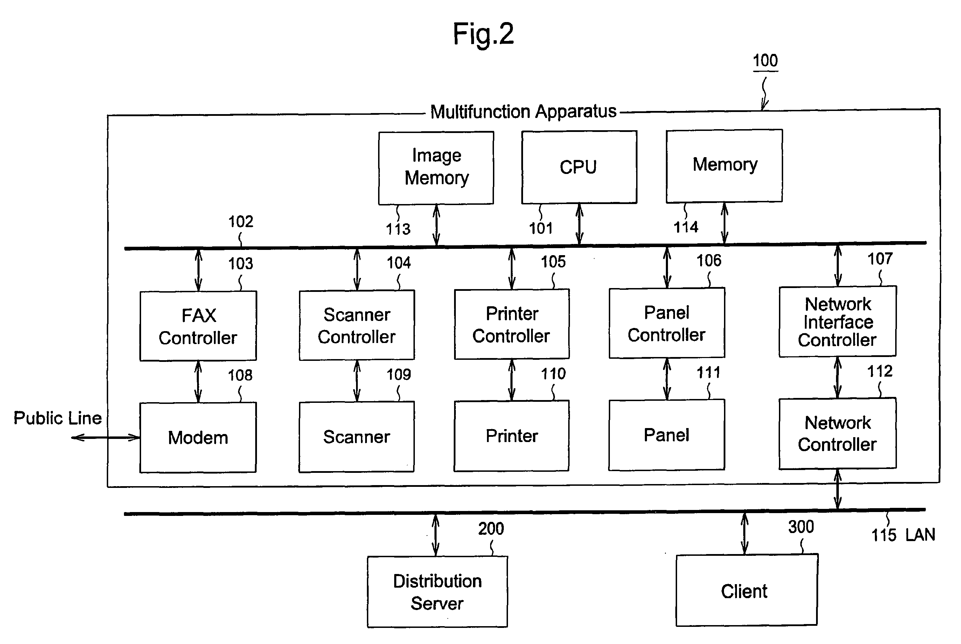

Fig. 2 is a detailed functional block diagram illustrating multifunction apparatus 100. In Fig. 2, through CPU 101 and via internal bus 102, multifunction apparatus 100 connects FAX controller 103, scanner controller 104, printer controller 105, panel controller 106, and network interface controller 107. Via modem 108, fax controller 103 exchanges image data with image memory 113, in order to perform facsimile transmission and reception. Scanner controller 104 performs a document scanning process by controlling scanner 109 and stores image data in image memory 113. Printer controller 105 controls printer 110 to print the image data stored in image memory 113. Panel controller 106 retrieves menu information stored in memory 114 and displays the data on panel 111. Network interface controller 107 controls network controller 112 that exchanges data generated by distribution server 200 and client 300 on network 115. Client 300 is another multifunction apparatus that is served by distribution server 200.

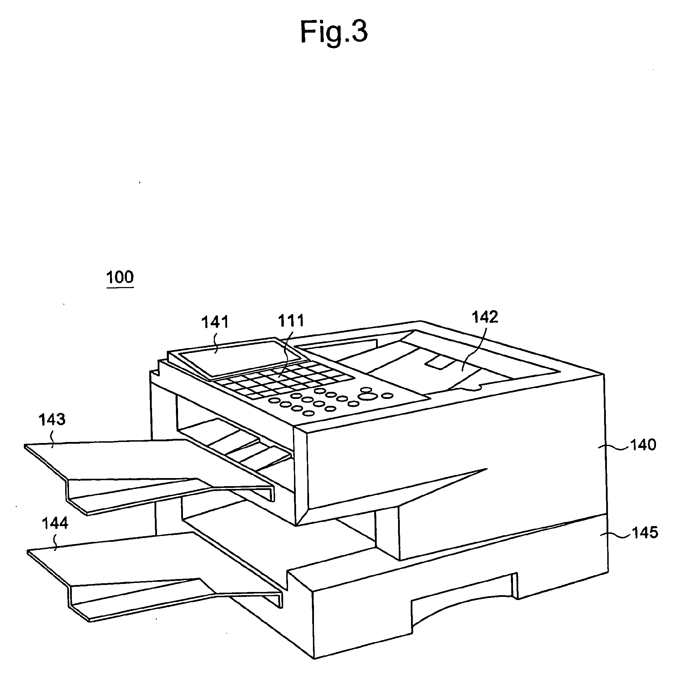

Fig. 3 is a schematic illustration of multifunction apparatus 100. In multifunction apparatus 100, scanner 109 and printer 110 are housed within body 140, together with other components such as CPU 101, memory 114, and modem 108. Panel 111, having LCD 141, is located at the left side of the top surface of multifunction apparatus 100. At the right side of panel 111, document feeder 142 for feeding a document to scanner 109 is located. At the left side surface of multifunction apparatus 100, finisher trays 143 and 144, which receive ejected printed paper from printer 110, are aligned parallel in an approximately horizontal plane. Paper tray 145, which feeds paper to printer 110, is located at the bottom of multifunction apparatus 100.

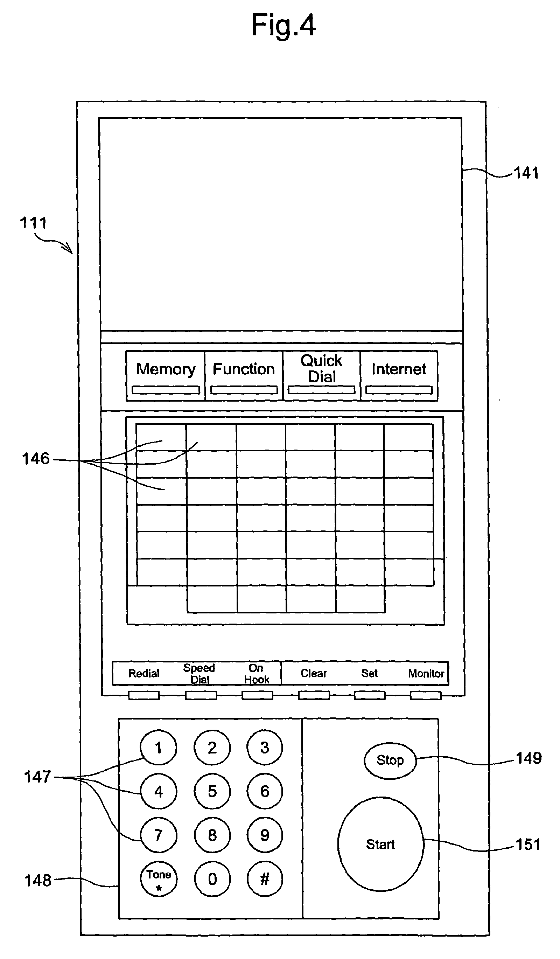

Fig. 4 is a plane view of panel 111 and LCD 141. The lower end of LCD 141 includes a memory button, function button, quick dial button, and Internet button. The Internet button is pressed when an operator needs to switch the mode to the input mode for Internet facsimile communication.

A plurality of one-touch buttons 146 are aligned below the above-described buttons. Below one-touch buttons 146, a redial/pause button, speed dial button, sub-address/on-hook button, clear/monitor volume button, set button, and monitor button are provided. In addition, numeric part 148, having numeric keys 147, is located further below. Each numeric key 147 has alphabet letters applied to allow the alphabet input. At the right side of numeric part 148, stop button 149 and start button 151 are provided. The user inputs various data using numeric keys 147.

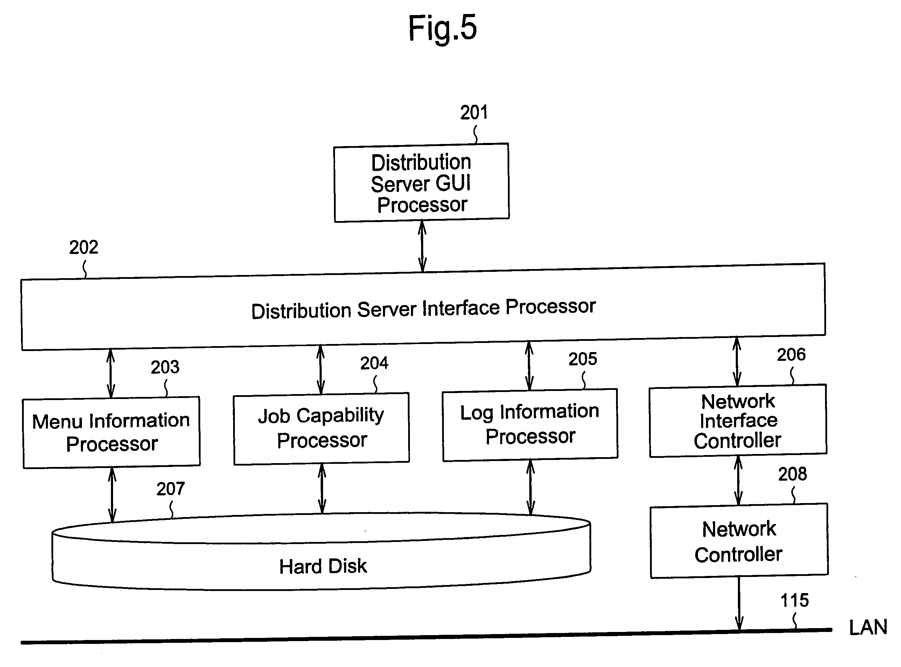

Fig. 5 is a functional block diagram of distribution server 200. Distribution server GUI processor 201 provides a work support screen when a user's personal job or a group job is registered in distribution server 200 from a personal computer. Via distribution server interface processor 202, multifunction apparatus 100 and distribution server GUI processor 201 control menu information processor 203, job capability processor 204, and log information processor 205. Menu information processor 203 registers menus in hard disk 207, the menus having stored in a tree-shape configuration. Menu information processor 203 also retrieves a menu requested by multifunction apparatus 100 from hard disk 207 and distributes the menu. Job capability processor 204 writes/reads data in/from hard disk 207, the data being job capability information (copying, printing, scanning, FAX transmission, etc.) to be processed by multifunction apparatus 100 on network 115. Log information processor 205 writes/reads data in/from hard disk 207 (as log information), the data being a function performed by distribution server 200. Hard disk 207 stores and manages menu information, job capability information, and log information in a multi-use data format such as XML and CSV file, in order to exchange data with other systems. Network interface controller 206 exchanges data with multifunction apparatus 100, client 300, other distribution servers, and other systems that are on network 115 via network controller 208.

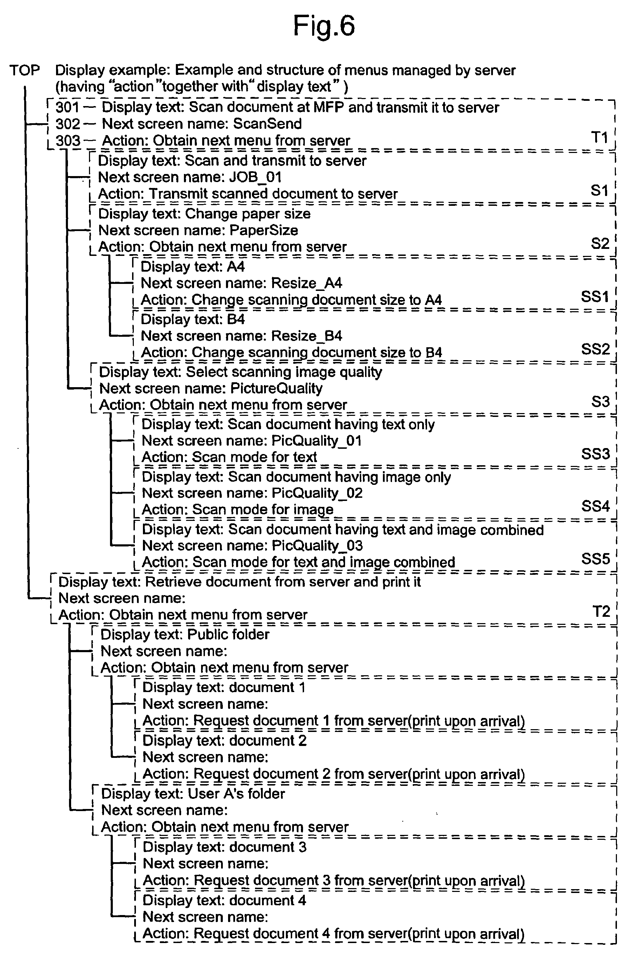

Fig. 6 illustrates a specific example of tree-shaped menus stored in hard disk 207. A menu includes "display text" 301 (text displayed in an operation screen), "next screen name" 302 (screen name of the next screen one layer below the current operation screen (menu screen)), and "action" 303 (command for multifunction apparatus 100 to execute at the currently displayed menu).

Fig. 6 illustrates menus T1 and T2 in the top layer (screen name TOP). In particular, menu T1 includes "display text" 301: "scan document at MFP and transmit it to server", which means "multifunction apparatus 100 reads the document using scanner 109 and transmit the data to a specific server".

"Next screen name" 302 of menu T1 is "ScanSend". "ScanSend" is named after subordinate menus (one layer below menu T1) that are related to "scan document at MFP and transmit it to server".

"Action" 303 of menu T1 is "obtain next menu from server". This is for a situation where multifunction apparatus 100 obtains the menus one layer below from distribution server 200, as the next action (operation).

When a menu that is one layer below the current menu is present, it is connected in the tree-shape configuration. In the example shown in Fig. 6, 3 menus S1, S2, and S3 are positioned one layer below the top menu T1. In particular, the configuration provides menu S1: "scan and transmit to server", menu S2: "change paper size", and menu S3: "select scanning image quality".

In particular, when a job: "scan document at MFP and transmit it to server" is selected, the next operation is one of "scan and transmit to server", "change paper size", and "select scanning image quality". Therefore, the corresponding operation menus (operation screens) are prepared.

Menus SS1 - SS5 are provided one layer below menus S2 and S3. For example, SS1 (change the scanning document size to A4) and SS2 (change the scanning document size to B4) are provided below menu S2 ("change paper size").

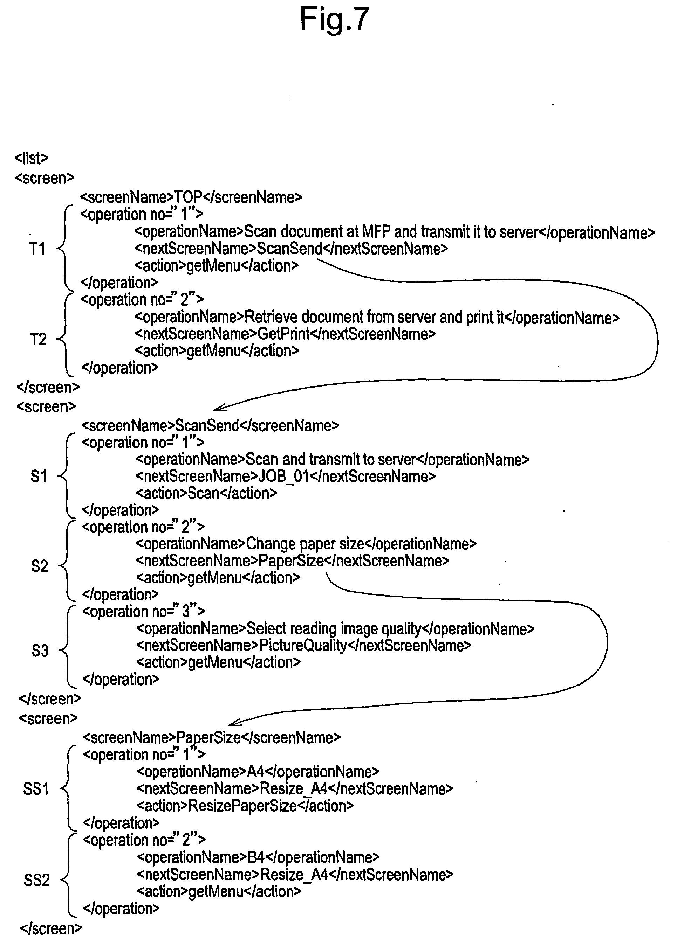

As described above, the operation steps on multifunction apparatus 100 are layered according to the contents of the job. Therefore, each menu for an operation screen, which is displayed on multifunction apparatus 100, can be layered. Fig. 7 illustrates an example of layered menu data of Fig. 6, written in the XML format.

The operation of the distribution server system (multifunction apparatus 100 and distribution server 200) having the above configuration is described in the following.

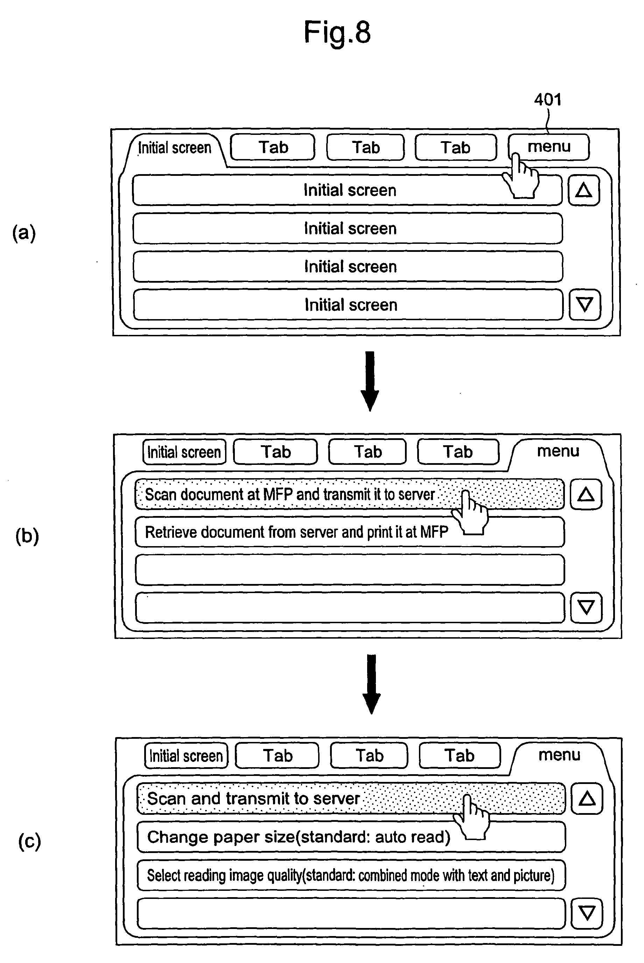

As shown in Fig. 8 (a), LCD 141 of panel 111 at multifunction apparatus 100 displays an initial screen. When menu button 401 is pressed from the initial screen shown in Fig. 8 (a), distribution server 200 distributes the menus.

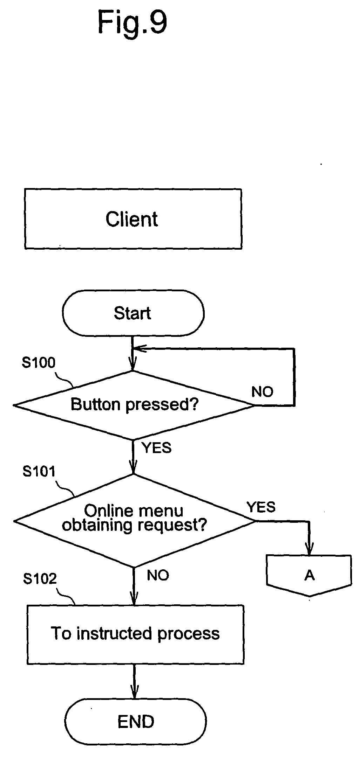

As shown in Fig. 9, multifunction apparatus 100, as a client of distribution server 200, waits for a button to be pressed (S100). When the button is pressed (S100), it is determined whether an online menu obtaining request is made (S101). When menu button 401 is pressed, it is recognized that the online menu obtaining request is made. When another button is pressed, the instructed process is executed (S102).

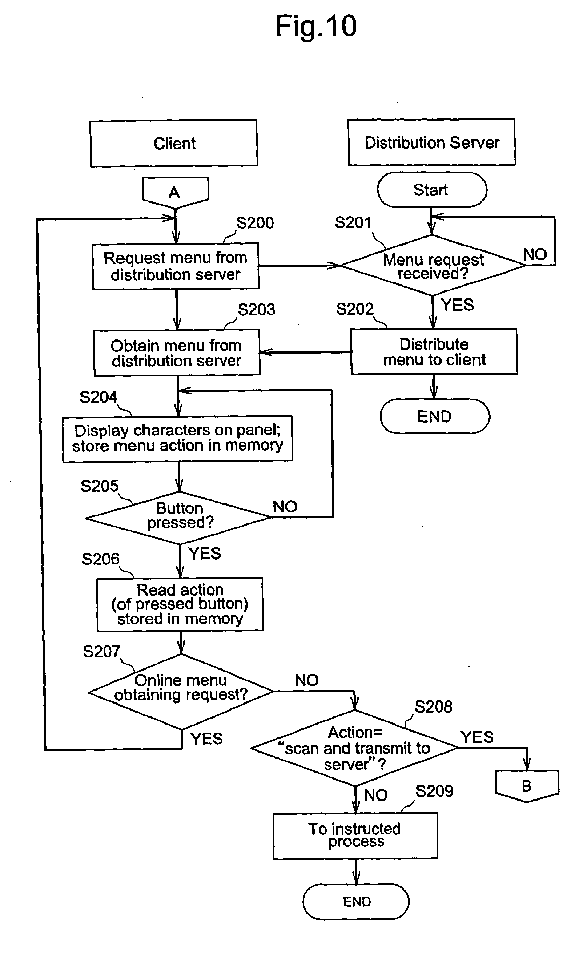

Fig. 10 illustrates a process when the online menu obtaining request is made. Multifunction apparatus 100 requests a menu from distribution server 200 (S200).

Distribution server 200 receives the menu request via LAN 115 (S201). Distribution server interface processor 202 delivers the received menu request to menu information processor 203. Then, menu information processor 203 retrieves the menus of multifunction apparatus 100, the menus being registered in hard disk 207. In particular, the each menu is retrieved (among the menus having stored in the tree-shape configuration) and distributed in sequence, from the top layer to the bottom layer, in accordance with the user's operation.

The following describes an operation of distributing and displaying menus in sequence from the top layer to the bottom layer, in reference to Figs. 8 (a), (b), and (c).

Upon receiving the initial menu request from multifunction apparatus 100, menu information processor 203 retrieves menus T1 and T2 in the top layer (from menus of multifunction apparatus 100 shown in Fig. 6) and distributes the retrieved menus to the requester (S202).

Multifunction apparatus 100 (requester) receives menus T1 and T2 from distribution server 200, as a response to the menu request (S203). Multifunction apparatus 100 stores menus T1 and T2 in memory 114. Then, CPU 101 retrieves each "display text" 301 from menus T1 and T2 and displays on LCD 141, while retrieving and storing "action" 303 from menus T1 and T2 (S204). As a result, LCD 141 of panel 111 displays a screen shown in Fig. 8 (b). To be specific, two jobs "scan document at MFP and transmit it to server" and "retrieve document from server and print it at MFP" are displayed in text. By pre-registering the two jobs in distribution server 200, as jobs for multifunction apparatus 100, the menus can be distributed.

In this example, the user selects the menu "scan document at MFP and transmit it to server" as a job. A touch sensor provided on LCD 141 detects that the button (item) for "scan document at MFP and transmit it to server" is selected from LCD 141 of multifunction apparatus 100 (S205). Then, the "action" corresponding to the button pressed by the user is retrieved from memory 114 (S206). As shown in Fig. 6, "action" 303 of menu T1 has the content: "obtain next menu from server", which is obtaining menus S1, S2, and S3 in one layer below menu T1.

Accordingly, it is recognized that the online menu obtaining request is made at step S207 of Fig. 10. Then, the control moves to step S200. At step S200, an obtaining request for menus S1, S2, and S3 (one layer below menu T1) is made, according to the "action" to "obtain next menu from server". For example, by specifying "next screen name" = ScanSend stored in memory 114, the request is made to distribution server 200.

Upon receiving the menu request (S201), distribution server 200 retrieves menus S1, S2, and S3 having the screen name = ScanSend, which are stored in hard disk 207. Then, distribution server 200 distributes the menus to multifunction apparatus 100 (client) (S202). However, the method of specifying the menu is not limited to the above. For example, the menu request can be made by specifying the layer number or the like, instead of specifying "next screen name" = ScanSend.

Similarly, multifunction apparatus 100 receives menus S1, S2, and S3 as a response to the menu request, from distribution server 200 (S203). Therefore, "scan and transmit to server" ("display text" 301 of menu S1), "change paper size" ("display text" 301 of menu S2), and "select scanning image quality" ("display text" 301 of menu S3) are displayed on LCD 141 of panel 111 (S204). Fig. 8 (c) illustrates a state where menus S1, S2, and S3 are displayed on LCD 141.

At multifunction apparatus 100, the user selects one of the menu items on LCD 141. In Fig. 8 (c), menu S1 button (item), at the very top of the list, "scan and transmit to server" is selected. In this case, the next "action" is "transmit the scanned document to server". Therefore, the online menu obtaining request is not made (S207).

At step S208, the "action" of menu S1 is verified. When the "action" is "scan and transmit to server" (S208), the actual document scanning operation begins. When the "action" is not "scan and transmit to server" (S208), the specified process is executed (S209).

In the example of Fig. 8 (c), the "action" is "scan and transmit to server" (S208). Therefore, the actual document scanning operation begins.

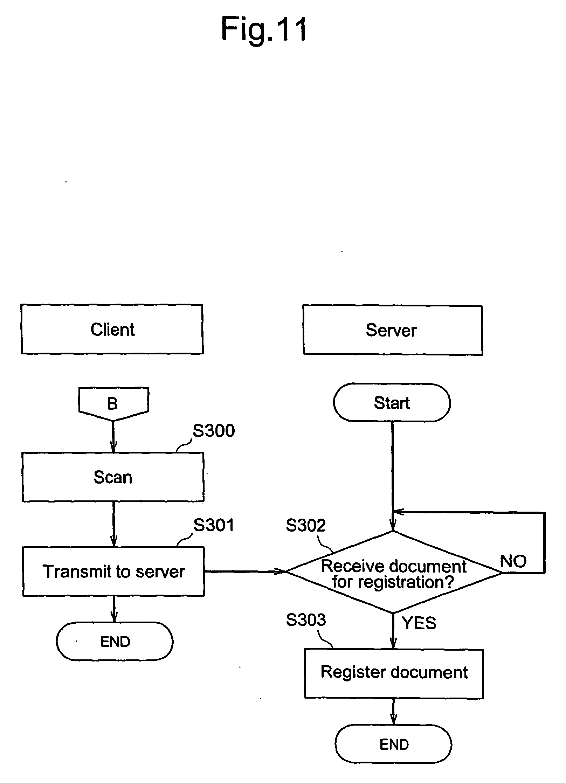

Fig. 11 is a flowchart illustrating a process where a document is scanned by multifunction apparatus 100 and registered in distribution server 200. When a document is set in scanner 109 of multifunction apparatus 100, and when start button 151 is pressed, the document is scanned page by page. Then, the scanned image data is stored in image memory 113 (S300). Thereafter, multifunction apparatus 100 issues a document registration request to distribution server 200, and the image data is transmitted from image memory 113 to distribution server 200 via LAN 115 (S301).

Upon transmitting ACK in response to the document registration request received from multifunction apparatus 100, distribution server 200 receives the image data (S302) and registers the document by applying a document name in hard disk 207 (S303). Fig. 5 does not show the configuration for document registration.

The above explanation has used an example of "scan and transmit to server" for illustrating the steps of the operation screens. However, operation screens for other jobs (registered in distribution server 200) can also be sequentially displayed on multifunction apparatus 100, according to the menus configured in layers as shown in Fig. 6.

According to the present embodiment, jobs to be executed by multifunction apparatus 100 are displayed in layers of operation screens according to the operation steps of multifunction apparatus 100. Menus for displaying the operation screens are also registered in the tree-shape configuration, in distribution server 200, so that distribution server 200 sequentially transmits the operation screens to multifunction apparatus 100. Therefore, there is no longer a need to store all of the operation screens in advance in multifunction apparatus 100. In addition, layered menus, in combination with display text 301 and action 303, are transmitted to multifunction apparatus 100. Therefore, multifunction apparatus 100 can quickly take the next action from the user's operation.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2003-417012 filed on December 15, 2003, entire content of which is expressly incorporated by reference herein.

## Claims

1. A multifunction apparatus that registers a job in a distribution server and receives a menu distribution from the distribution server when executing the job, the apparatus comprising:
a menu obtaining unit that requests and obtains a desired menu from the distribution server;
a memory that stores the obtained menu; and
a display that retrieves menu information from said memory and displays the menu information as an operation screen,
wherein, menus in the distribution server are layered according to operation steps, and said menu obtaining unit sequentially obtains each menu from a top layer.

2. The multifunction apparatus according to claim 1, wherein, each menu includes display text and link information, the display text being text displayed on an operation screen, the link information being related to a subordinate menu displayed on the operation screen, and wherein, said menu obtaining unit specifies a subordinate menu using the link information.

3. The multifunction apparatus according to claim 1, wherein each menu includes display text and an action, the display text being text displayed on an operation screen, the action including a command for the multifunction apparatus, and wherein said menu obtaining unit issues an obtaining request for a subordinate menu based on the action.

4. A distribution server that registers a job of a multifunction apparatus and distributes a menu according to the job, the multifunction apparatus connected to the distribution server via a network, the server comprising:
a memory that stores a plurality of menus that are layered according to operation steps, for each job to be executed by multifunction apparatus, the menus being data for displaying an operation screen where an instruction is input by selecting a menu; and
a menu information processor that retrieves a menu from said memory according to a request form the multifunction apparatus and transmits the menu to the requesting multifunction apparatus.

5. The multifunction apparatus according to claim 4, wherein, each menu includes display text, link information, and an action, the display text being text displayed on an operation screen, the link information being related to a subordinate menu displayed on the operation screen, the action including a command for the multifunction apparatus.

6. A menu distribution method comprising:
registering, in a distribution server, a plurality of menus that are layered according to operation steps for each job, the menus being data for displaying an operation screen where an instruction is input by selecting a menu; and
sequentially distributing a menu, from a top layer, from the distribution server to a multifunction apparatus, corresponding to an operation on the multifunction apparatus.
